(19) Europäisches Patentamt
European Patent Office
Office européen des brevets

(11) **EP 4 450 996 A1**

(12) **EUROPEAN PATENT APPLICATION**

(43) Date of publication:
**23.10.2024 Bulletin 2024/43**

(21) Application number: **23168444.0**

(22) Date of filing: **18.04.2023**

(51) International Patent Classification (IPC):
***G01S 5/02*** *(2010.01)*

(52) Cooperative Patent Classification (CPC):
**G01S 5/02524; G01S 5/02521**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventor: **Martinez Alba, Alberto**
**81379 München (DE)**

(74) Representative: **Siemens Patent Attorneys**
**Postfach 22 16 34**
**80506 München (DE)**

(54) **METHOD FOR GENERATING A COMBINED RADIOMAP, METHOD TO EVALUATE AN ESTIMATED POSITION, COMBINATION DEVICE, LOCALIZATION DEVICE, COMPUTER PROGRAM PRODUCT AND COMPUTER-READABLE STORAGE MEDIUM**

(57) The invention is related to a method for generating a combined radiomap $C(p)$ from a set of subradiomaps $C_{b,k}(p)$, comprising following steps performed by a combination device (3) : receiving a set of subradiomaps $C_{b,k}(p)$, wherein each of the subradiomaps $C_{b,k}(p)$ of the set describes a signal strength $r_{b,k}$ of a respective beacon $b$ of a respective option $k$ at a position $p$ within a predefined area (1); combining the subradiomaps $C_{b,k}(p)$ to the combined radiomap $C(p)$, in a combination procedure, wherein the combined radiomap $C(p)$ describes a fingerprint $r = \langle r_1, ..., r_B \rangle$ comprising the signal strengths $r_b$ of the respective beacons $b$ at the position $p$; The combination procedure comprises steps of: defining a set of combination hyperparameters $\theta_b = \langle \theta_{b,1}, ..., \theta_{b,K} \rangle$ defining a weight of the radiomaps $C_{b,k}(p)$ of the beacons $b$ in a combination function; Evaluate combination hyperparameters $\Theta = \langle \theta_1, ..., \theta_B \rangle$ by solving the general optimization problem in a solving procedure.

FIG 2

EP 4 450 996 A1

**Description**

The invention is related to a method for generating a combined radiomap, a method to evaluate an estimated position, a combination device, a localization device, a computer program product and a computer-readable storage medium.

Indoor positioning is a crucial feature for diverse industrial use cases, as it allows for improved monitoring and task automation, thus enhancing production efficiency. Nonetheless, inexpensive positioning deployments based on signal strength measurements struggle to provide good localization accuracy, as these measurements are usually highly variant.

Fingerprinting based on received signal strength indicators (RSSI) has been proposed as a promising approach to mitigate the high variability and lead to relatively high positioning accuracy while keeping deployment costs low. Nonetheless, using RSSI fingerprinting for accurate positioning is only possible when the estimation of the RSSI values over a whole considered area in a RSSI radiomap is itself accurate. A RSSI radiomap describes the RSSI value of a beacon at a position within the area. By using multiple RSSI radiomaps, related to respective beacons it is possible to locate a receiver device by analyzing the fingerprint measured by the receiver device.

Obtaining accurate RSSI radiomaps is a challenging task, since there are several options available comprising an interpolation of empirical data, machine learning assisted estimation, indoor propagation models or raytracing simulations for example. Multiple radiomap estimation techniques can be combined to yield a radiomap that is more accurate than any radiomap based on an individual estimation. However, conventional approaches to combination do not take into account that the purpose of the combination may be to increase positioning accuracy rather than pure radiomap accuracy. As a result, when using conventional approaches, the resulting radiomap may lead to sub-optimal position estimates.

Being a relevant problem for numerous applications and use cases, estimating RSSI radiomaps has been tackled by previous work.

Kushki, A., et al. "Radio map fusion for indoor positioning in wireless local area networks." 2005 7th International Conference on Information Fusion. Vol. 2. IEEE, 2005. This publication presents a method for combining RSSI radiomaps based on Gaussian or exponential kernels, the Nadaraya-Watson estimator, and a compensatory operator to maximize the probability of estimating the correct RSSI value for each point in space given multiple measurements. The resulting radiomap combination is eventually used for localization, achieving better accuracy than other combination approaches. Nonetheless, their combination method relies exclusively on *a priori* information, that is, positioning accuracy is only used to evaluate the goodness of the combination but not to select the combination parameters.

Laoudias, Christos, Demetrios Zeinalipour-Yazti, and Christos G. Panayiotou. "Crowdsourced indoor localization for diverse devices through radiomap fusion." International Conference on Indoor Positioning and Indoor Navigation. IEEE, 2013. This paper proposes to obtain a radiomap estimation from multiple receivers, whose measurements can be combined into a single common radiomap. Once again, the goal of the combination is to estimate the position of mobile receivers, but it still relies on a priori information.

Xue, Weixing, et al. "A new algorithm for indoor RSSI radio map reconstruction." IEEE Access 6, 2018. The authors of this paper propose an algorithm for estimating RSSI radiomaps based on the signal feature point in RSSI space and low rank matrix filling theory. As in previous works, localization is used for assessment of the combination validity but not taken into account at the training phase.

Li, Kehan, et al. "Supreme: Fine-grained radio map reconstruction via spatial-temporal fusion network." 2020 19th ACM/IEEE International Conference on Information Processing in Sensor Networks (IPSN). IEEE, 2020. In this paper, the authors present a spatial-temporal fusion network to reconstruct fine-grained radio map from crowd-sourced data. Similar to other approaches, the focus is to obtain a radiomap estimation using RSSI measurements and related data, and then use positioning for assessment.

Wang, Xiangyu, et al. "Indoor radio map construction and localization with deep Gaussian processes." IEEE Internet of Things Journal 7.11 (2020): 11238-11249. This publication proposes to use a deep Gaussian process for fine-grained indoor radiomap construction from RSSI samples. Once again, localization is only used at the testing phase.

It is an objective of the present invention to provide a method for combining radio maps for providing a combined radio map for increasing a positioning accuracy.

This objective is achieved by the respective subject matter of the independent claims. Further implementations and preferred embodiments are subject matter of the dependent claims.

The idea of the invention is to solve a two-step optimization problem, a nested optimization problem, to combine radiomaps into location-optimal estimations.

A first aspect of the present invention is related to a method for generating a combined radiomap $C(\boldsymbol{p})$ from a set of subradiomaps $C_{b,k}(\boldsymbol{p})$. The method is performed by a combination device.

The method comprises receiving of a set of subradiomaps $C_{b,k}(\boldsymbol{p})$, wherein each of the subradiomaps $C_{b,k}(\boldsymbol{p})$ of the set describes a signal strength $r_{b,k}$ of a signal send by a respective beacon $\boldsymbol{b}$. The subradiomaps $C_{b,k}(\boldsymbol{p})$ comprise

respective options $k$ of the signal strength $r_{b,k}$ at a position $p$ within a predefined area. The signal strength $r_{b,k}$ may comprise a radio signal strength indicator value (RSSI).

In other words, the combination device receives multiple subradiomaps $C_{b,k}(p)$. Each of the subradiomaps $C_{b,k}(p)$ is a mapping of the signal strength $r_{b,k}$ of a signal provided by a respective beacon $b$ at the position $p$. The respective subradiomap $C_{b,k}(p)$. may be the option $k$ of $K$ options in total for the respective beacon $b$, assigning the signal strength $r_{b,k}$ to the position $p$. In other words for each of the beacons $b$ there may be $K$ subradiomaps $C_{b,k}(p)$ describing the signal strength $r_{b,k}$ of the beacon $b$. The subradiomaps $C_{b,k}(p)$ of the options $K$ may be generated using different methods, therefore the subradiomaps $C_{b,k}(p)$ may provide different signal strengths $r_{b,k}$ at a position $p$ for the beacon $b$.

The subradiomaps $C_{b,k}(p)$ may be provided by respective receiver devices that may have tracked their current position $p$ and the respective signal strength $r_{b,k}$ at the respective current position $p$. The subradiomaps $C_{b,k}(p)$ may also be provided by computation devices that simulated the signal strength $r_{b,k}$ at the positions $p$ within the predefined area.

A localization of a receiver device by means of a measured fingerprint comprising the signal strengths $r_{b,k}$ measured by the receiver device at his current position may be performed in a localisation method, using a combined radiomap $C(p)$. The localisation method allows an investigation of an estimated position $p*$ of the receiver device. To generate the combined radiomap $C(p)$, the subradiomaps have to be combined to the combined radiomap $C(p)$.

The combination device combines the subradiomaps $C_{b,k}(p)$ to the combined radiomap $C(p)$ in a combination procedure. The combined radiomap $C(p)$ describes the fingerprint $r = \langle r_1, \dots , r_B \rangle$ comprising the signal strengths $r_b$ of the respective beacons $b$ at the position $p$ within the predefined area.

The combination procedure comprises several steps.

One step comprises a defining of a set of combination hyperparameters $\theta_b = \langle \theta_{b,1}, \dots , \theta_{b,K} \rangle$, defining weights of the respective subradiomaps $C_{b,k}(p)$ of the beacons $b$ in a combination function. In other words, the subradiomaps $C_{b,k}(p)$ are combined using the combination function. The combination function may combine the subradiomaps $C_{b,k}(p)$ wherein values of the subradiomaps $C_{b,k}(p)$ are combined according to the respective weights, described by the combination hyperparameters $\theta_b$. The values of the combination hyperparameters $\theta_b$ may depend on the beacon $b$, the option $k$ and/or the position $p$ for example.

To combine the subradiomaps $C_{b,k}(p)$, the combination function for combining the subradiomaps $C_{b,k}(p)$ of the different options $k$ of the respective beacon $b$ to a radiomap $C_b(p)$ of the beacon $b$ is defined by the combination device:

$$C_b(p) = C_b(p; \theta_b) = \Gamma(C_{b,1}(p), \dots, C_{b,K}(p); \theta_b)$$

To define the combination hyperparameters $\theta_b$ used to combine the subradiomaps $C_{b,k}(p)$, an evaluation of the combination hyperparameters $\theta_b$ is to be performed using an optimization procedure. To perform the optimization procedure, a optimization problem has to be defined.

The combination device defines a general optimization problem to find a set of the combination hyperparameters $\Theta = \langle \theta_1, \dots , \theta_B \rangle$.

The set of the combination hyperparameters $\Theta$ is evaluated by minimizing a distance between a true position $p_n$ and an estimated position $p*_n$. In other words, the optimisation procedure evaluates the set of the combination hyperparameters $\Theta$ that minimizes the distance between the true position $p_n$ and the estimated position $p*_n$. The true position $p_n$ may be the location where the respective known fingerprint $r$ has been measured by the detection device. The estimated position $p*_n$ is a location that has been found by minimzzing a difference between the known fingerprint $b$ and an estimated fingerprint $r*$ provided by the combined radiomap $C(p)$. The estimated position $p*_n$. May be evaluated by the minimization of an inner optimization problem of the general optimization problem.

In other words, the general optimization problem comprises an inner optimization problem to find the estimated position $p*_n$ by minimizing a difference between a true fingerprint $r$ and an estimated fingerprint $*$. The estimated fingerprint $r*$ is calculated by means of the combined radiomaps $C(p)$.

$$\Theta* = \arg\min_{\Theta} \frac{1}{N} \sum_{n=1}^{N} \left| p_n - \arg\min_{p} \sum_{b=1}^{B} (C_b(p_n; \theta_b) - r_b)^2 \right|^2$$

Evaluating combination hyperparameters $\Theta = \langle \theta_1, \dots , \theta_B \rangle$ by solving the general optimization problem in a solving procedure.

This approach guarantees that a positioning error derived from using the combined radiomap $C(p)$ is the lowest possible, at the expense of a more complicated combination approach.

According to a further embodiment of the invention, the method comprises a step of providing the combined radiomap $C(\boldsymbol{p})$ to a localization device. The localization device is configured to evaluate the estimated position $\boldsymbol{p}*$ of a user entity based on a measured fingerprint $\boldsymbol{r}$. In other words, a transmission of the combined radiomap $C(\boldsymbol{p})$ from the combination device to the localization device is performed to allow the localization device to investigate the estimated position $\boldsymbol{p}*$ of the user entity by means of the combined radiomap $C(\boldsymbol{p})$ based on the measured fingerprint $\boldsymbol{r}$.

According to a further embodiment of the invention, the solving procedure comprises a step of solving an outer part of the general optimization problem by using a Bayesian optimization procedure and a step of solving the inner optimization problem by using a generic global optimization metaheuristic. In other words, the the solving procedure to solve the general optimization problem is performed by the combination device in two steps. In one of the two steps the outer part of the general optimization problem is solved by the combination device wherein the solving of the outer part comprises the Bayesian optimization procedure. In the other of the two steps the inner part of the general optimization problem is solved by the combination device, wherein the solving of the inner part comprises a use of a generic global optimization metaheuristic.

According to a further embodiment of the invention, the generic global optimization metaheuristic comprises a differential evolution. In other words, the inner part of the general optimization problem is solved by the combination device using the differential evolution. The differential evolution is a global optimization metaheuristic method that optimizes a problem of the inner part of the general optimization problem in an iterative method to improve a given candidate solution of the inner part with regard to a given measure of quality.

According to a further embodiment of the invention, the generic global optimization metaheuristic comprises a simulated annealing. In other words, the inner part of the general optimization problem is solved by the combination device using the simulated annealing. The differential evolution is a global optimization metaheuristic method that approximates a global optimum of the inner part of the general optimization problem by a probabilistic technique.

According to a further embodiment of the invention, the Bayesian optimization procedure comprises a training-cross validation-test. The training-cross validation-test comprises a step of iteratively solving the general optimization problem using a training data set, wherein the training data set comprises pairs of true fingerprints $\boldsymbol{r_n}$ at respective true positions $\boldsymbol{p_n}$ within the predefined area. The training-cross validation-test comprises a step of evaluating after each iteration step an average positioning error $\boldsymbol{E}$ between the true positions $\boldsymbol{p_n}$ and the estimated positions $\boldsymbol{p}*_n$ evaluated by solving a positioning optimization problem given by

$$\boldsymbol{p}*= \arg \min_{\boldsymbol{p}} \sum_{b=1}^{B}(C_b(\boldsymbol{p_n}; \boldsymbol{\theta}_b) - r_b)^2 \, .$$

using the combination function radiomap $C_b(\boldsymbol{p})$ of the respective iteration step. The Bayesian optimization procedure is terminated by the terminating the upon fulfilment of a predefined termination condition by the average positioning error $\boldsymbol{E}$.

A second aspect of the present invention is related to a method to evaluate an estimated position $\boldsymbol{p}*$ of a receiver device using a combined radiomap $C(\boldsymbol{p})$ by a localization device. The combined radiomap $C(\boldsymbol{p})$ is determined in a method according to the first aspect of the invention.

The method to evaluate the estimated position $\boldsymbol{p}*$ of the receiver device comprises a measurement of a fingerprint $\boldsymbol{r} = \langle r_1, \dots , r_B \rangle$ comprising signal strengths $r_b$ of respective beacons $\boldsymbol{b}$ at a current position $\boldsymbol{p}$ within a predefined area by a receiver device. The fingerprint $\boldsymbol{r} = \langle r_1, \dots, r_B \rangle$ is provided to a localization device by the receiver device. The localization device evaluates the estimated position $\boldsymbol{p}*$ by solving a positioning optimization problem for the provided fingerprint $\boldsymbol{r} = r_1, \dots , r_B \rangle$, wherein the positioning optimization problem is given as (1):

$$\boldsymbol{p}*= \arg \min_{\boldsymbol{p}} \sum_{b=1}^{B}(C_b(\boldsymbol{p_n}; \boldsymbol{\theta}_b) - r_b)^2 \, .$$

For use cases or use situations which may arise during the procedures according to the first aspect and/or the second aspect and which are not explicitly described here, it may be provided that, in accordance with the procedures, an error message and/or a request for user feedback is issued and/or a default setting and/or a predetermined initial state is set.

A third aspect of the present invention is related to a combination device. The combination device is configured to receive a set of subradiomaps $C_{b,k}(\boldsymbol{p})$, wherein each of the subradiomaps $C_{b,k}(\boldsymbol{p})$ of the set describes a signal strength $r_{b,k}$ of a signal of a respective beacon $\boldsymbol{b}$ of a respective option $k$ at a position $\boldsymbol{p}$ within a predefined area.

The combination device is configured to combine the subradiomaps $C_{b,k}(\boldsymbol{p})$ to the combined radiomap $C(\boldsymbol{p})$, in a combination procedure, wherein the combined radiomap $C(\boldsymbol{p})$ describes a fingerprint $\boldsymbol{r} = \langle_1, \dots , r_B \rangle$ comprising the signal strengths $r_b$ of the respective beacons $\boldsymbol{b}$ at the position $\boldsymbol{p}$ within the predefined area. The combination device is configured to define a set of combination hyperparameters $\theta_b = \langle \theta_{b,1}, \ldots , \theta_{b,K} \rangle$ defining a weight of the radiomaps $C_{b,k}(p)$ of the beacons *b* in a combination function. The combination device is configured to define the combination function

$$C_b(p) = C_b(p; \theta_b) = \Gamma(C_{b,1}(p), \ldots, C_{b,K}(p); \theta_b)$$

for combining the subradiomaps $C_{b,k}(p)$ of the beacon *b* to a radiomap $C_b(p)$ of the beacon *b*. The combination device is configured to define a general optimization problem to find a set of the combination hyperparameters $\Theta = \langle \theta_1, \ldots , \theta_B \rangle$ by minimizing a distance between a true position $p_n$ and an estimated position $p*_n$, wherein the general optimization problem comprises an inner optimization problem to find the estimated position $p*_n$ by minimizing a difference between a true fingerprint *r* and an estimated fingerprint $r*$, wherein the estimated fingerprint $r*$ is calculated by means of the combined radiomaps $C(p)$:

$$\Theta = \arg\min_{\Theta} \frac{1}{N} \sum_{n=1}^{N} \left| p_n - \arg\min_{p} \sum_{b=1}^{B} (C_b(p_n; \theta_b) - r_b)^2 \right|^2$$

The combination device is configured to valuate combination hyperparameters $\Theta = \langle \theta_1, \ldots , \theta_B \rangle$ by solving the general optimization problem in a solving procedure.

A fourth aspect of the present invention is related to a localization device. The localization device is configured to evaluate an estimated position $p*$ of the receiver device using a combined radiomap $C(p)$. The combined radiomap $C(p)$ is determined in a method according to the first aspect of the invention.

The localization device is configured to evaluate the estimated position $p*$ of the receiver device. The localization device is configured to receive a fingerprint $r = \langle r_1, \ldots, r_B \rangle$ comprising signal strengths $r_b$ of respective beacons *b* at a position *p* within a predefined area from a receiver device. The localization device is configured to evaluate the estimated position $p*$ by solving a positioning optimization problem for the fingerprint $r = \langle r_1, \ldots , r_B \rangle$, wherein the positioning optimization problem is given as (1):

$$p* = \arg\min_{p} \sum_{b=1}^{B} (C_b(p_n; \theta_b) - r_b)^2 .$$

A fifth aspect of the invention is related to a computer program product comprising program code for performing a method according to the first aspect and/or the second aspect. The computer program product may also be regarded to a computer program.

A sixth aspect of the invention is related to a computer-readable storage medium comprising at least the computer program product according to the fifth aspect.

The combination device and the localization device can be understood as a hardware module or as a software module. In particular, a module may also comprise a hardware and a software portion implemented on the hardware. A software module may be understood as a portion of software code functionally connected and combined to a device. A software module may comprise or implement several processing steps and/or data structures. A method step of providing a software module may be understood to comprise providing a respective software code in a computer readable fashion on a computer readable storage medium.

Independent of the grammatical term usage, individuals with male, female or other gender identities are included within the term.

The combination device and the localization device may comprise computing devices to perform steps of the method.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

FIG 1     shows a schematic illustration of a receiver device in a predefined area;

FIG 2     shows a schematic illustration of a combination device;

FIG 3     shows a schematic illustration of a predefined area;

FIG 4     shows a schematic illustration of radiomaps;

FIG 5     shows a schematic illustration of two subradiomaps

FIG 6     shows a schematic illustration of a method;

FIG 7     shows a schematic illustration of a method; and

FIG 8     shows a schematic illustration of maps of a logsquare error.

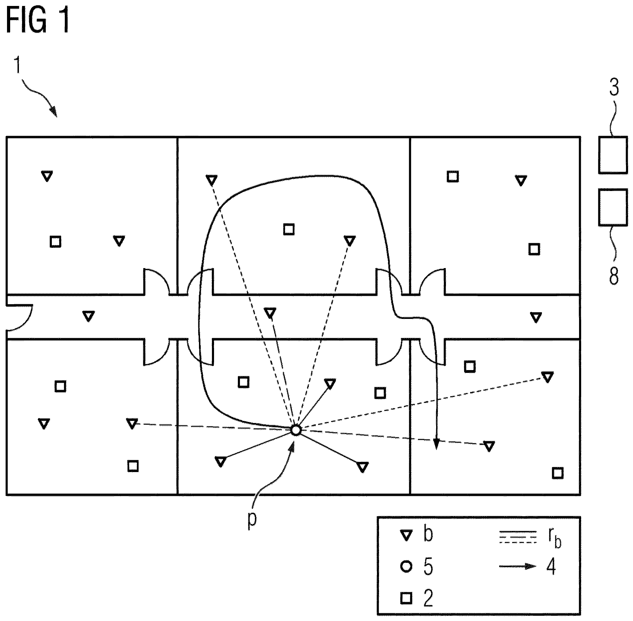

FIG 1 shows a schematic illustration of a receiver device in a predefined area.

A positioning-focused radiomap combination approach that explicitly considers positioning error minimization when performing this radiomap combination is provided. This may lead to a complicated optimization problem whose objective function is itself the argument of a nested optimization problem. To overcome this difficulty, a training method based on Bayesian Optimization is proposed that allows to obtain near-optimal solutions with a low number of objective function evaluations.

FIG 1 shows the predefined area 1, wherein a set of $B$ radio beacons $b$, that may comprise Bluetooth, UWB, WiFi or 5G access points may be provided at respective known locations. The beacons $b$ may be distributed over a predefined indoor area 1 within which a user entity 5, such as an automatic guided vehicle that may comprise a respective receiver device 2 may, move along a trajectory 4 and perform a predefined task. In addition, there may be a set of fixed receiver devices 2 whose respective locations may be known. The fixed receiver devices 2 and the user entity 5 comprising the receiver device 2 may be able to receive signals of the beacons $b$ and measure the respective signal strengths $r_b$ of the signals provided by the respective beacons $b$ at their current position $\boldsymbol{p}$. The signals may be periodically transmitted by the radio beacons $b$.

The fixed receiver devices 2 and the user entity 5 comprising the receiver device 2 may periodically listen to and simultaneously measure the signal strengths $r_b$ of the signals sent by the beacons $b$, resulting into an array of radio signal strength indicators (RSSI) for a given receiver, time, and position, also known as RSSI fingerprint. A RSSI fingerprint is denoted as $\boldsymbol{r} = \langle r_1, \ldots, r_B \rangle$. Because of radio propagation properties of the environment, some of these measurements could be missing as the received signal strengths $r_b$ may be below a sensitivity of the receiver devices 2. To allow a tracking of an estimated position $\boldsymbol{p}*$ of a receiver device 2, a localization device 8 may be provided, configured to evaluate the estimated position $\boldsymbol{p}*$ of the receiver device 2 based on the fingerprint $\boldsymbol{r} = \langle r_1, \ldots, r_B \rangle$ measured at its current position $\boldsymbol{p}$ by means of a combined radiomap $C(\boldsymbol{p})$. A combination device 3 may be configured to generate the combined radiomap

$C(\boldsymbol{p})$ and to provide the combined radiomap $C(\boldsymbol{p})$ to the localization device 8.

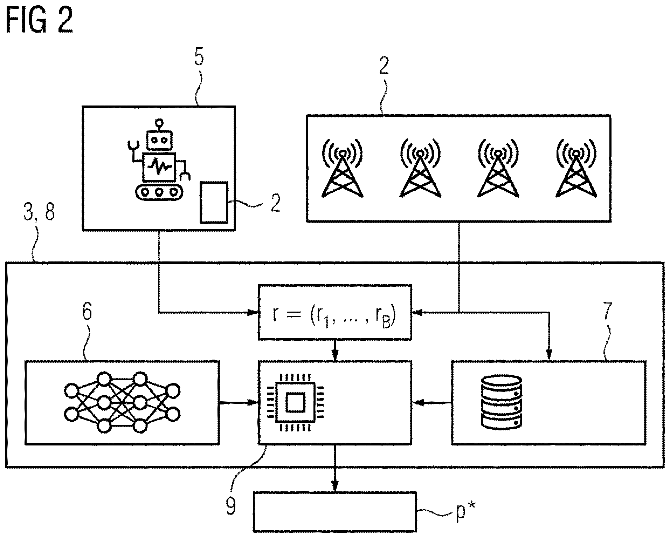

FIG 2 shows a schematic illustration of a combination device.

The combination device 3 may also be the localization device 8. The combination device 3 may be a processing device that may receive and store a history of measured fingerprints $\boldsymbol{r}$ and that may perform calculations described below. The combination device 3, may be a part of the user entity 5 or it may be designed as a separate, dedicated device to which the measured fingerprints $\boldsymbol{r}$ may be provided by the receiver devices 2. The combination device 3 may comprise a database 7 to store the fingerprints $\boldsymbol{r}$ and/or subradiomaps $C_{b,k}(\boldsymbol{p})$ according to an option $k$ for the respective beacons $b$. By the combination device 3, a method to provide a combined radiomap $C(\boldsymbol{p})$ may be performed.

In order to estimate the estimated position $\boldsymbol{p}*$ of the user entity 5 based on the measured fingerprint $\boldsymbol{r}$, it may be assumed that the localization device 8 may have access to a set of radiomaps $C_b(\boldsymbol{p})$ estimating the expected RSSI values $r_1, ... , r_B$ expected at each point $\boldsymbol{p}$ in the considered area for each beacon $b$. Formally, a radiomap

$$C_b(\boldsymbol{p}) : \mathbb{R}^2 \mapsto \mathbb{R}$$ for beacon $b$ is a function that maps a 2D position vector $\boldsymbol{p}$ to the expected RSSI value $r_b$ when measured at that position $\boldsymbol{p}$. A straighforward extension is possible for 3D radiomaps.

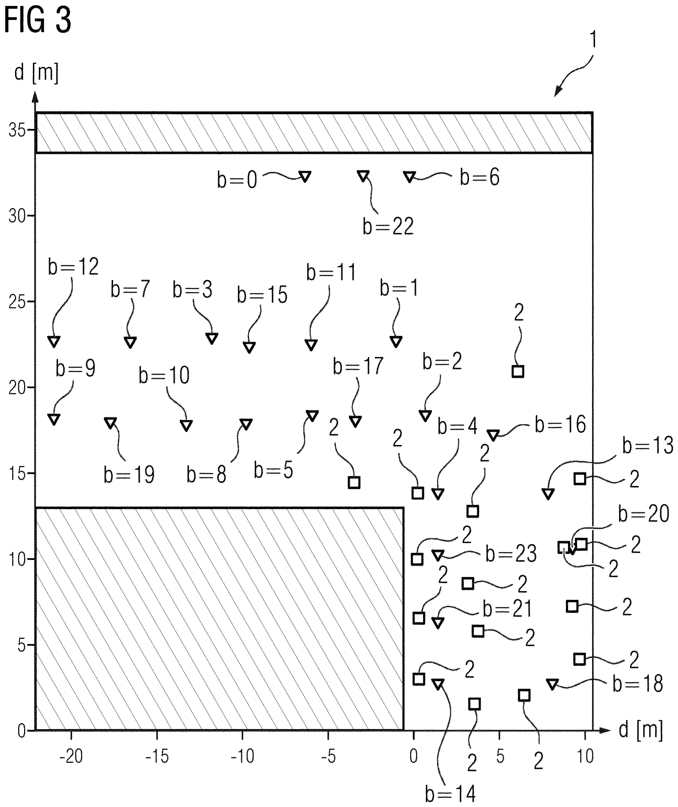

FIG 3 shows a schematic illustration of a predefined area.

In the predefined area 1 there may be beacons $b$ at respective positions. The beacons $b$ may provide the respective signals having the respective strengths $r_b$ at the respective positions $\boldsymbol{p}$ in the predefined area 1. The receiver device 2 may measure the respective signal strength $r_b$ of the signal send by the respective beacons $b$ at his current position $\boldsymbol{p}$. The signals strengths $r_1, ... , r_B$ may be provided in the fingerprint $\boldsymbol{r}$. Using the radiomaps $C_b(\boldsymbol{p})$ for the signal strengths $r_1, ... , r_B$ of the beacons $b$ it may be possible to investigate an estimated position $\boldsymbol{p}^*$ of the receiver device 2 by using the localization device 8. In an ideal case the estimated position $\boldsymbol{p}^*$ of the receiver device 2 is the same as the current position $\boldsymbol{p}$ of the receiver device 2.

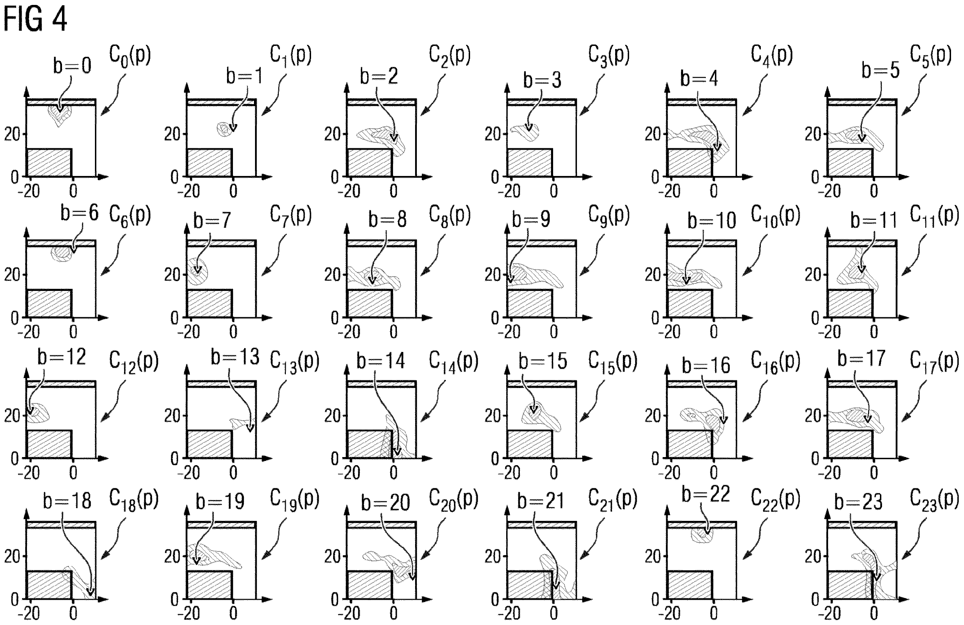

FIG 4 shows a schematic illustration of radiomaps.

Examples of radiomaps $C_b(\boldsymbol{p})$ mapping the signal strengths $r_1, ... , r_B$ of the respective beacons $b$ within the predefined area 1 depicted in **Fehler! Verweisquelle konnte nicht gefunden werden.** are shown in **Fehler! Verweisquelle konnte nicht gefunden werden..**

If an accurate radiomap estimation $C_b(\boldsymbol{p})$ for each beacon $b$ is provided, it may be possible to find an estimated position $\boldsymbol{p}^*$ with a minimal aggregated square error between the set of expected RSSI values $\langle C_1(\boldsymbol{p}^*), ... , C_B(\boldsymbol{p}^*) \rangle$ and the measured RSSI fingerpring $\boldsymbol{r} = \langle r_1, ... , r_B \rangle$ of a receiver device 2.

Conventional global optimization approaches may be used to solve this problem and find $p^*$, or a near-optimal approximation.

Nevertheless, there may be multiple ways to estimate an RSSI radiomap $C_b(\boldsymbol{p})$ for the respective beacon $b$, which potentially leads to having multiple candidate subradiomaps $C_{b,k}(\boldsymbol{p})$ for each beacon $b$. For instance, different machine learning algorithms may be used for subradiomap estimation, or one subradiomap $C_{b,k}(\boldsymbol{p})$ may be based exclusively on propagation models and another subradiomap $C_{b,k}(\boldsymbol{p})$ on purely empirical data. A number of subradiomap options $\boldsymbol{k}$ is denoted as $\boldsymbol{K}$, and each radiomap option as $C_{b,k}(\boldsymbol{p})$, $\forall k \in \{1,...,K\}$. An objective is to combine all options $C_{b,k}(\boldsymbol{p})$ into a single combined radiomap $C_b(\boldsymbol{p})$ for a respective beacon $b$ to optimize positioning accuracy when used for localization applications by a localization device 8. It may be assumed that there is no a priori reason to discard or prefer any of the options $k$.

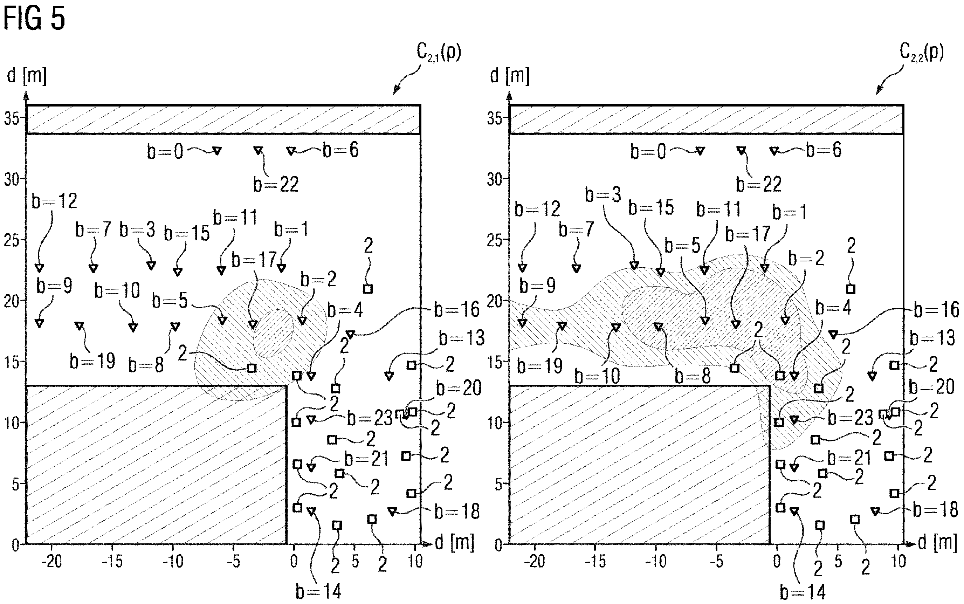

FIG 5 shows a schematic illustration of two subradiomaps

In **Fehler! Verweisquelle konnte nicht gefunden werden.** an example of two subradiomaps $C_{b,k}(\boldsymbol{p})$ according to respective options $\boldsymbol{k} = 1,2$ for beacon $b=2$ in the predefined area 1 is shown. A left radiomap $C_{2,1}(\boldsymbol{p})$ may be based on an interpolation of empirical data (model-free), whereas a right radiomap $C_{2,2}(\boldsymbol{p})$ may be a result of a raytracing simulation using a predefined indoor propagation model (model-based).

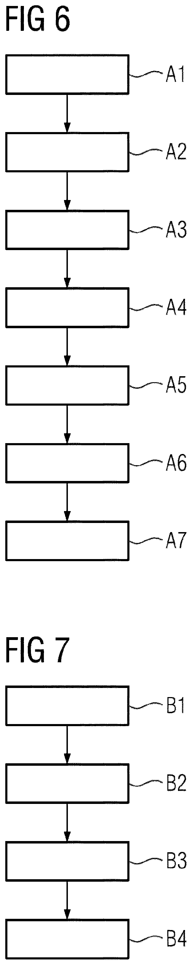

FIG 6 shows a schematic illustration of a method for generating a combined radiomap $C(\boldsymbol{p})$ from a set of subradiomaps $C_{b,k}(\boldsymbol{p})$.

The method may be performed by a combination device 3.

The method may comprise a step A1 of receiving a set of subradiomaps $C_{b,k}(\boldsymbol{p})$, wherein each of the subradiomaps $C_{b,k}(\boldsymbol{p})$ of the set may describe a signal strength $r_{b,k}$ of a respective beacon $\boldsymbol{b}$ of a respective option $k$ at a position $\boldsymbol{p}$ within a predefined area 1.

The method may comprise a combining of the subradiomaps $C_{b,k}(\boldsymbol{p})$ to the combined radiomap $C(\boldsymbol{p})$, in a combination procedure. The combined radiomap $C(\boldsymbol{p})$ may describe a fingerprint $\boldsymbol{r} = \langle r_1, ... , r_B \rangle$ comprising the signal strengths $r_b$ of the respective beacons $\boldsymbol{b}$ at the position $\boldsymbol{p}$ within the predefined area 1.

The combination procedure may comprise a step of defining a set of combination hyperparameters $\theta_b = \langle \theta_{b,1}, ... , \theta_{b,K} \rangle$ defining a weight of the radiomaps $C_{b,k}(\boldsymbol{p})$ of the beacons $\boldsymbol{b}$ in a combination function in a step A2.

In a step A3 the combination function

$$C_b(\boldsymbol{p}) = C_b(\boldsymbol{p}; \boldsymbol{\theta}_b) = \Gamma(C_{b,1}(\boldsymbol{p}), \dots, C_{b,K}(\boldsymbol{p}); \boldsymbol{\theta}_b)$$

may be defined for combining the subradiomaps $C_{b,k}(\boldsymbol{p})$ of the beacon $b$ to a radiomap $C_b(\boldsymbol{p})$ of the beacon $b$.

In a step A4 a general optimization problem may be defined to find a set of the combination hyperparameters $\Theta* = \langle \theta_1, \dots, \theta_B \rangle$ by minimizing a distance between a true position $\boldsymbol{p}_n$ and an estimated position $\boldsymbol{p}*_n$.

The general optimization problem may comprise an inner optimization problem to find the estimated position $\boldsymbol{p}*_n$ by minimizing a difference between a true fingerprint $r$ and an estimated fingerprint $r*$, wherein the estimated fingerprint $r*$ is calculated by means of the combined radiomaps $C(\boldsymbol{p})$:

$$\Theta* = \arg\min_{\Theta} \frac{1}{N} \sum_{n=1}^{N} \left| \boldsymbol{p}_n - \arg\min_{\boldsymbol{p}} \sum_{b=1}^{B} (C_b(\boldsymbol{p}_n; \boldsymbol{\theta}_b) - r_b)^2 \right|^2$$

In a step A5 the inner problem of the general optimization problem may be evaluated.

$$\arg\min_{\boldsymbol{p}} \sum_{b=1}^{B} (C_b(\boldsymbol{p}_n; \boldsymbol{\theta}_b) - r_b)^2$$

In a step A6 the outer problem of the general optimization problem

$$\arg\min_{\Theta} \frac{1}{N} \sum_{n=1}^{N} |\boldsymbol{p}_n - \boldsymbol{p}*_n|^2$$

may be solved to evaluate the combination hyperparameters $\Theta* = \langle \theta_1, \dots, \theta_B \rangle$.

In a step A7 the combination device 3 may provide the combined radiomap $C(\boldsymbol{p})$ to a localization device 8 to allow the localization device 8 to determine an estimated position $\boldsymbol{p}*$ of a receiver device 2 based on the fingerprint $r$ provided by the receiver device 2.

In order to model a radiomap combination method, a set of hyperparameters $\theta_b$ and a generic combination function $\Gamma(\cdot)$ such that: $C_b(\boldsymbol{p}) = C_b(\boldsymbol{p}; \theta_b) = \Gamma(C_{b,1}(\boldsymbol{p}), \dots, C_{b,K}(\boldsymbol{p}); \theta_b)$ may be defined by the combination device 3. These combination function and hyperparameters may define an approach to combine all subradiomap options $k$ of beacons $b$ into a single radiomap for transmitter $\boldsymbol{b}$. For instance, a weighted sum/average of all subradiomaps $k$ may be used whose weights may themselves dependent on a position $\boldsymbol{p}$. The combination map may be provided by:

$$C_b(\boldsymbol{p}; \boldsymbol{\theta}_b) = \sum_{k=1}^{K} \theta_k(\boldsymbol{p}) \cdot C_{b,k}(\boldsymbol{p})$$

A hyperparameter function $\theta_k(\boldsymbol{p})$ may be interpolated from a grid of discrete points, such that a finite number of hyperparameters to optimize is provided. The whole set of hyperparameters for all transmitters and grid points is denoted as $\Theta = \langle \theta_1, \dots, \theta_B \rangle$.

A conventional approach for estimating these hyperparameters for radiomap combination would be to take a set of training data comprising pairs of mobile RSSI fingerprints and their corresponding location and configure the combination parameters such that the average square error between the expected value of the variable and the measured one is minimized for all transmitters and data points. Formally, this may be expressed as:

$$\Theta^*_{conventional} = \arg\min_{\Theta} \frac{1}{N} \sum_{n=1}^{N} \sum_{b=1}^{B} (C_b(\boldsymbol{p}_n; \boldsymbol{\theta}_b) - r_b)^2$$

Other approaches may be possible, such as those maximizing a priori probability or those based on radiofrequency propagation properties. However, since the intention is to use these radiomaps for positioning, this conventional approach may suboptimal in general for that purpose. In order to understand why for the sake of simplicity, it is considered that the training set consists of a single data point (RSSI fingerprint and its corresponding location).

Using this conventional approach, a set of radiomaps that minimize the error in the RSSI prediction at the measured point would be provided. But if the process is inverted and the radiomaps are used to figure out which point correspond to the training RSSI fingerprint, it is possible that this results in a different location: although the RSSI error is minimized for the true position, another location may have an even lower RSSI error.

Instead, in the approach it is proposed to find the combination hyperparameters such that they minimize a distance between a true position and a location obtained by using the combined radiomaps to predict the location. This implies that the hyperparameters of a function that itself returns the argument of a minimization problem the positioning problem, must be minimized (2):

$$\Theta^{*}_{proposed} = \arg\min_{\Theta} \frac{1}{N} \sum_{n=1}^{N} \left| \boldsymbol{p}_n - \arg\min_{\boldsymbol{p}} \sum_{b=1}^{B} (C_b(\boldsymbol{p}_n; \boldsymbol{\theta}_b) - r_b)^2 \right|^2$$

This novel approach guarantees that a positioning error derived from using the combined radiomap is the lowest possible, at the expense of a more complicated combination approach. Indeed, in order to sample the objective function of the outer minimization problem in (2), it may be necessary to solve the inner minimization problem, which may lead to long overall optimization times. To tackle this, it is proposed to use Bayesian Optimization for solving the outer problem and a generic global optimization metaheuristic such as differential evolution or simulated annealing for the inner problem. In a nutshell, Bayesian Optimization consists in randomly sampling a few times the objective function, then use a, frequently Gaussian, kernel to make estimations about the range of the values in the unsampled regions, and finally sample the point whose probability of yielding a lower value is the highest. This process may be repeated for a finite number of times or until a pre-defined convergence criteria is met.

Based on the iterative nature of the Bayesian Optimization approach, it is proposed to combine it with a training-cross validation-test split of the available data set. That is, a training data set is used for iteratively solving (2), and after each iteration an average positioning error with the cross-validation data set is evaluated by solving **Fehler! Verweisquelle konnte nicht gefunden warden..** When this cross-validation error stops reducing, the optimization may be stopped to prevent overfitting the training data set. Finally, the test set may be used to assess a final positioning error.

FIG 7 shows a schematic illustration of a method to evaluate an estimated position of a receiver device.

The method may be configured to evaluate the estimated position of a user entity by using a combined radiomap $C(\boldsymbol{p})$ determined. The combined radiomap $C(\boldsymbol{p})$ may be generated using a method shown in FIG 6.

In a first step B1 a receiver device may measure a fingerprint $\boldsymbol{r} = \langle r_1, \ldots, r_B \rangle$ comprising signal strengths $r_b$ of respective beacons $\boldsymbol{b}$ at a position $\boldsymbol{p}$ within a predefined area. The position $\boldsymbol{p}$ may be the current position of the receiver device within a predefined area. The receiver device may be inside a user entity like an autonomous driven vehicle.

The receiver device may provide the fingerprint $\boldsymbol{r} = \langle r_1, \ldots, r_B \rangle$ to a localization device in a step B2 to locate the current position $\boldsymbol{p}$ of the receiver device in the predefined area by analysing the measured fingerprint $\boldsymbol{r} = \langle r_1, \ldots, r_B \rangle$. The localization device may be inside the user entity, the combination device or a separate device.

In a step B3 the localization device may evaluating the position $\boldsymbol{p}$ of the receiver device by solving a positioning optimization problem for the fingerprint $\boldsymbol{r} = \langle r_1, \ldots, r_B \rangle$ (1) :

$$\boldsymbol{p}* = \arg\min_{\boldsymbol{p}} \sum_{b=1}^{B} (C_b(\boldsymbol{p}_n; \boldsymbol{\theta}_b) - r_b)^2 .$$

In a step B4 the localization device may provide the position $\boldsymbol{p}$ of the receiver device to the receiver device or to another device.

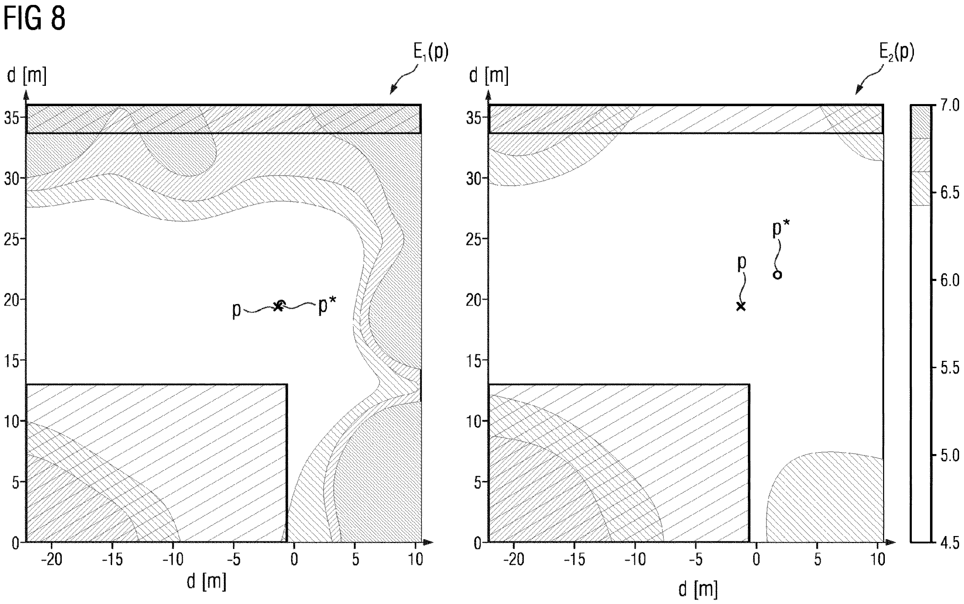

FIG 8 shows a schematic illustration of maps of a log-square error.

In FIG 8 a log-square RSSI error for a proposed approach $E_1(\boldsymbol{p})$ and a log-square RSSI error for a conventional approach $E_2(\boldsymbol{p})$ is shown. The log-square RSSI error may be the logarithm of the square error as shown in **Fehler! Verweisquelle konnte nicht gefunden werden.** is used for clarity. The absolute value of the RSSI error at the actual location $\boldsymbol{p}$ of a mobile device using the conventional (naive) approach is lower than that of the proposed approach, but there are other points with even lower errors, which leads to a higher positioning error. Using the proposed approach, the RSSI error at the actual location $\boldsymbol{p}$ is higher, but the point $\boldsymbol{p}*$ with the lowest RSSI error within the considered area is much closer to the actual location $p$, which is the goal of the whole process.

As a result, by training the positioning system to find $\Theta^*_{proposed}$ as described in **Fehler! Verweisquelle konnte nicht gefunden werden**. using Bayesian Optimization and global optimization metaheuristics, a radiomap combination approach is obtained that maximizes the utility of the resulting radiomaps $C_b\left(p; \Theta^*_{b,proposed}\right)$ concerning positioning.

Usually, conventional positioning techniques based on RSSI fingerprinting often require an estimation of the underlying radiomaps which is obtained from a single source using empirical reconstruction, simulation or theoretical models. The proposed approach allows to efficiently combine multiple independent sources of radiomap estimation.

Even for those existing RSSI fingerprinting approaches that do combine radiomap estimations, the influence of this combination on the resulting positioning accuracy is not taken into account, but it is performed using naive, probability-based, or radiofrequency-based methods. In this approach, an appropriate combination of subradiomaps as the one that yields the best positioning accuracy is selected, since a training-based approach is proposed. As a result, the positioning accuracy should be better than alternative techniques.

As opposed to radiomap combining approaches based on non-configurable procedures, the training phase described in the method allows the radiomap combination to be adapted to the considered scenario, instead of being generic.

## Claims

1. Method for generating a combined radiomap $C(p)$ from a set of subradiomaps $C_{b,k}(p)$, comprising following steps performed by a combination device (3):

   - receiving a set of subradiomaps $C_{b,k}(p)$, wherein each of the subradiomaps $C_{b,k}(p)$ of the set describes a signal strength $r_{b,k}$ of a respective beacon $b$ of a respective option $k$ at a position $p$ within a predefined area (1);
   - combining the subradiomaps $C_{b,k}(p)$ to the combined radiomap $C(p)$, in a combination procedure, wherein the combined radiomap $C(p)$ describes a fingerprint $r = \langle r_1, \ldots, r_B \rangle$ comprising the signal strengths $r_b$ of the respective beacons $b$ at the position $p$ within the predefined area (1);

   **characterized in that**
   the combination procedure comprises steps of:

   - defining a set of combination hyperparameters $\theta_b = \langle \theta_{b,1}, \ldots, \theta_{b,K} \rangle$ defining a weight of the radiomaps $C_{b,k}(p)$ of the beacons $b$ in a combination function;
   - defining the combination function

   $$C_b(p) = C_b(p; \theta_b) = \Gamma(C_{b,1}(p), \ldots, C_{b,K}(p); \theta_b)$$

   for combining the subradiomaps $C_{b,k}(p)$ of the beacon $b$ to a radiomap $C_b(p)$ of the beacon $b$;
   - defining a general optimization problem to find a set of the combination hyperparameters $\Theta = \langle \theta_1, \ldots, \theta_B \rangle$ by minimizing a distance between a true position $p_n$ and an estimated position $p*_n$, wherein the general optimization problem comprises an inner optimization problem to find the estimated position $p*_n$ by minimizing a difference between a true fingerprint $r$ and an estimated fingerprint $r*$, wherein the estimated fingerprint $r*$ is calculated by means of the combined radiomaps $C(p)$:

   $$\Theta = \arg\min_\Theta \frac{1}{N} \sum_{n=1}^{N} \left| p_n - \arg\min_p \sum_{b=1}^{B} (C_b(p_n; \theta_b) - r_b)^2 \right|^2$$

   - Evaluating combination hyperparameters $\Theta = \langle \theta_1, \ldots, \theta_B \rangle$ by solving the general optimization problem in a solving procedure.

2. Method according to claim 1, **characterized in that** the method comprises a step of providing the combined radiomap $C(\boldsymbol{p})$ to a localization device (8).

3. Method according to claim 1 or 2, **characterized in that** the solving procedure comprises

   - a step of solving an outer part of the general optimization problem by using a Bayesian optimization procedure; and
   - a step of solving the inner optimization problem by using a generic global optimization metaheuristic.

4. Method according to claim 3, **characterized in that** the generic global optimization metaheuristic comprises a differential evolution.

5. Method according to claim 3 or 4, **characterized in that** the generic global optimization metaheuristic comprises a simulated annealing.

6. Method according to claim 3 or one of the claims 4 or 5 referring to claim 3, **characterized in that** the Bayesian optimization procedure comprises a training-cross validation-test comprising steps of:

   - iteratively solving the general optimization problem using a training data set, wherein the training data set comprises pairs of true fingerprints $\boldsymbol{r}_n$ at respective true positions $\boldsymbol{p}_n$ within the predefined area;
   - evaluating after each iteration step an average positioning error $\mathbf{E}$ between the true positions $\boldsymbol{p}_n$ and the estimated positions $\boldsymbol{p}*_n$ evaluated by solving a positioning optimization problem:

$$\boldsymbol{p}* = \arg\min_{\boldsymbol{p}} \sum_{b=1}^{B} (C_b(\boldsymbol{p}_n; \boldsymbol{\theta}_b) - r_b)^2 \, .$$

   using the combination function radiomap $C_b(\boldsymbol{p})$ of the respective iteration step; and
   - terminating the the Bayesian optimization procedure upon fulfilment of a predefined termination condition by the average positioning error E.

7. Method to evaluate an estimated position $\boldsymbol{p}*$ of a receiver device (2), using a combined radiomap $C(\boldsymbol{p})$ determined in a method according to one of the preceeding claims, comprising steps of:

   - measuring a fingerprint $\boldsymbol{r} = \langle r_1, \dots, r_B \rangle$ comprising signal strengths $r_b$ of respective beacons $\boldsymbol{b}$ at a position $\boldsymbol{p}$ within a predefined area (1) by the receiver device (2);
   - providing the fingerprint $\boldsymbol{r} = \langle r_1, \dots, r_B \rangle$ to a localization device (8);
   - evaluating the estimated position $\boldsymbol{p}*$ by the localization device (8) by solving a positioning optimization problem for the fingerprint $\boldsymbol{r} = \langle r_1, \dots, r_B \rangle$:

$$\boldsymbol{p}* = \arg\min_{\boldsymbol{p}} \sum_{b=1}^{B} (C_b(\boldsymbol{p}_n; \boldsymbol{\theta}_b) - r_b)^2 \, .$$

8. Combination device (3) configured to:

   - receive a set of subradiomaps $C_{b,k}(\boldsymbol{p})$, wherein each of the subradiomaps $C_{b,k}(\boldsymbol{p})$ of the set describes a signal strength $r_{b,k}$ of a respective beacon $\boldsymbol{b}$ of a respective option $\boldsymbol{k}$ at a position $\boldsymbol{p}$ within a predefined area (1);
   - combine the subradiomaps $C_{b,k}(\boldsymbol{p})$ to the combined radiomap $C(\boldsymbol{p})$, in a combination procedure, wherein the combined radiomap $C(\boldsymbol{p})$ describes a fingerprint $\boldsymbol{r} = \langle r_1, \dots, r_B \rangle$ comprising the signal strengths $r_b$ of the respective beacons $\boldsymbol{b}$ at the position $\boldsymbol{p}$ within the predefined area (1);

   **characterized in that**
   the combination device is configured to

   - define a set of combination hyperparameters $\boldsymbol{\theta}_b = \langle \theta_{b,1}, \dots, \theta_{b,K} \rangle$ defining a weight of the radiomaps $C_{b,k}(\boldsymbol{p})$ of the beacons $\boldsymbol{b}$ in a combination function;
   - define the combination function

$$C_b(\boldsymbol{p}) = C_b(\boldsymbol{p}; \boldsymbol{\theta}_b) = \Gamma(C_{b,1}(\boldsymbol{p}), \dots, C_{b,K}(\boldsymbol{p}); \boldsymbol{\theta}_b)$$

for combining the subradiomaps $C_{b,k}(\boldsymbol{p})$ of the beacon $b$ to a radiomap $C_b(\boldsymbol{p})$ of the beacon $b$; and

- define a general optimization problem to find a set of the combination hyperparameters $\Theta = \langle \theta_1, \dots, \theta_B \rangle$ by minimizing a distance between a true position $\boldsymbol{p}_n$ and an estimated position $\boldsymbol{p}*_n$, wherein the general optimization problem comprises an inner optimization problem to find the estimated position $\boldsymbol{p}*_n$ by minimizing a difference between a true fingerprint $\boldsymbol{r}$ and an estimated fingerprint $\boldsymbol{r}*$, wherein the estimated fingerprint $\boldsymbol{r}*$ is calculated by means of the combined radiomap $C(\boldsymbol{p})$:

$$\Theta = \arg\min_{\Theta} \frac{1}{N} \sum_{n=1}^{N} \left| \boldsymbol{p}_n - \arg\min_{\boldsymbol{p}} \sum_{b=1}^{B} (C_b(\boldsymbol{p}_n; \boldsymbol{\theta}_b) - r_b)^2 \right|^2$$

- evaluate combination hyperparameters $\Theta = \langle \theta_1, \dots, \theta_B \rangle$ by solving the general optimization problem in a solving procedure.

9. Localization device (8) configured to evaluate an estimated position $\boldsymbol{p}*$ of a receiver device (2), using a combined radiomap $C(\boldsymbol{p})$ determined in a method according to one of the claims 1 to 6, **characterized in that** the localization device (8) is configured to:

- receive a fingerprint $\boldsymbol{r} = \langle r_1, \dots, r_B \rangle$ comprising signal strengths $r_b$ of respective beacons $\boldsymbol{b}$ at a position $\boldsymbol{p}$ within a predefined area (1) from the receiver device (2);
- evaluate the estimated position $\boldsymbol{p}*$ by solving a positioning optimization problem for the fingerprint $\boldsymbol{r} = \langle r_1, \dots, r_B \rangle$ using:

$$\boldsymbol{p}* = \arg\min_{\boldsymbol{p}} \sum_{b=1}^{B} (C_b(\boldsymbol{p}_n; \boldsymbol{\theta}_b) - r_b)^2 .$$

10. A computer program product comprising program code for performing a method according to one of the claims 1 to 6 or claim 7.

11. A computer-readable storage medium comprising at least the computer program product according to claim 10.

FIG 1

FIG 2

# FIG 3

FIG 4

$C_5(p)$   b=5

$C_{11}(p)$   b=11

$C_{17}(p)$   b=17

$C_{23}(p)$   b=23

$C_4(p)$   b=4

$C_{10}(p)$   b=10

$C_{16}(p)$   b=16

$C_{22}(p)$   b=22

$C_3(p)$   b=3

$C_9(p)$   b=9

$C_{15}(p)$   b=15

$C_{21}(p)$   b=21

$C_2(p)$   b=2

$C_8(p)$   b=8

$C_{14}(p)$   b=14

$C_{20}(p)$   b=20

$C_1(p)$   b=1

$C_7(p)$   b=7

$C_{13}(p)$   b=13

$C_{19}(p)$   b=19

$C_0(p)$   b=0

$C_6(p)$   b=6

$C_{12}(p)$   b=12

$C_{18}(p)$   b=18

FIG 5

## FIG 6

## FIG 7

FIG 8

Europäisches Patentamt

European Patent Office

Office européen des brevets

# EUROPEAN SEARCH REPORT

Application Number

EP 23 16 8444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALBA ALBERTO MARTINEZ ET AL: "Uncertainty-boosted radiomap-based indoor positioning with RSSI fingerprints", 2022 IEEE GLOBECOM WORKSHOPS (GC WKSHPS), IEEE, 4 December 2022 (2022-12-04), pages 148-153, XP034272928, DOI: 10.1109/GCWKSHPS56602.2022.10008689 [retrieved on 2023-01-12] * the whole document * | 1-11 | INV. G01S5/02 |
| X | LAOUDIAS CHRISTOS ET AL: "Crowdsourced indoor localization for diverse devices through radiomap fusion", INTERNATIONAL CONFERENCE ON INDOOR POSITIONING AND INDOOR NAVIGATION, IEEE, 28 October 2013 (2013-10-28), pages 1-7, XP032595660, DOI: 10.1109/IPIN.2013.6817906 [retrieved on 2014-05-16] * the whole document * | 1-11 | |
| X | US 2020/300961 A1 (WIROLA LAURI AARNE JOHANNES [FI] ET AL) 24 September 2020 (2020-09-24) * paragraph [0034] - paragraph [0036] * * paragraph [0073] - paragraph [0090] * * paragraph [0111] - paragraph [0136] * * figures 1-5 * | 1-5,8, 10,11 | TECHNICAL FIELDS SEARCHED (IPC) G01S |

The present search report has been drawn up for all claims

| Place of search | Date of completion of the search | Examiner |
|---|---|---|
| Munich | 3 October 2023 | Galmiche, Aurélien |

EPO FORM 1503 03.82 (P04C01)

## ANNEX TO THE EUROPEAN SEARCH REPORT
## ON EUROPEAN PATENT APPLICATION NO.

EP 23 16 8444

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2023

| Patent document cited in search report | | Publication date | Patent family member(s) | | Publication date |
|---|---|---|---|---|---|
| US 2020300961 | A1 | 24-09-2020 | EP | 3712638 A1 | 23-09-2020 |
| | | | US | 2020300961 A1 | 24-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Radio map fusion for indoor positioning in wireless local area networks. **KUSHKI, A. et al.** 2005 7th International Conference on Information Fusion. IEEE, 2005, vol. 2
- Crowdsourced indoor localization for diverse devices through radiomap fusion. **LAOUDIAS, CHRISTOS ; DEMETRIOS ZEINALIPOUR-YAZTI ; CHRISTOS G. PANAYIOTOU.** International Conference on Indoor Positioning and Indoor Navigation. IEEE, 2013

- **XUE, WEIXING et al.** A new algorithm for indoor RSSI radio map reconstruction. *IEEE Access,* 2018, vol. 6
- Supreme: Fine-grained radio map reconstruction via spatial-temporal fusion network. **LI, KEHAN et al.** 2020 19th ACM/IEEE International Conference on Information Processing in Sensor Networks (IPSN). IEEE, 2020
- **WANG, XIANGYU et al.** Indoor radio map construction and localization with deep Gaussian processes. *IEEE Internet of Things Journal,* 2020, vol. 7 (11), 11238-11249